# EUROPÄISCHE PATENTSCHRIFT

(11) **EP 3 429 041 B1**
(45) Veröffentlichungstag und Bekanntmachung des Hinweises auf die Patenterteilung: **24.07.2019**
(21) Anmeldenummer: 18179475.1
(22) Anmeldetag: 25.06.2018
(51) Int. Cl.: H02G 3/06, H02G 15/007

(54) **KABELVERSCHRAUBUNG UND STECKVERBINDER MIT EINER KABELVERSCHRAUBUNG**
CABLE FITTING AND CONNECTOR WITH A CABLE FITTING
PRESSE-ÉTOUPE ET CONNECTEUR ENFICHABLE DOTÉ D'UNE PRESSE-ÉTOUPE

(30) Priorität: 11.07.2017 DE 102017211808
(43) Veröffentlichungstag der Anmeldung: 16.01.2019
(73) Patentinhaber: ifm electronic gmbh, 45128 Essen (DE)
(72) Erfinder: Ohlinger, Thomas, 88239 Wangen (DE); Ryczaj, Wojciech, 45-805 Opole (PL); Durdyn, Jacek, 45-763 Opole (PL)

(56) Entgegenhaltungen:
- WO-A1-02/067399
- DE-C3- 2 434 847
- US-A1- 2012 252 259
- US-B1- 6 350 955

## Beschreibung

Die Erfindung betrifft eine Kabelverschraubung mit einer Dichtung und einer Zugentlastung gemäß dem Oberbegriff des Patentanspruchs 1 und einen Steckverbinder mit einer solchen Kabelverschraubung gemäß Anspruch 10.

Unter einer Kabelverschraubung soll hier auch eine Kabeldurchführung oder ein Kabeleintritt in ein elektrisches oder elektronisches Gerät verstanden werden.
Derartige Kabelverschraubungen sind seit langen bekannt, und werden vor allem dann eingesetzt, wenn ein Kabel mit einem konfektionierbaren Stecker oder einer Kabeldose elektrisch verbunden werden sollen, oder ein Kabeleintritt in ein elektrisches Gerät benötig wird.
Neben einer Zugentlastung benötigt der Kabeleintritt meistens auch eine den vorgesehenen Einsatzbedingungen entsprechende Dichtung.

Aus der WO 2013 020 827 A2 ist eine Kabelverschraubung bekannt, bei der ein Klemmelement für die Kabelzugentlastung sorgt, und ein Dichtelement, das formschlüssig am Kabel anliegt, und für eine gewisse Dichtfunktion sorgt. Diese Kabelverschraubung ist sehr aufwendig gestaltet, die Dichtfunktion nur eingeschränkt gegeben und insbesondere für Industrieanwendungen weniger geeignet.

Die DE 1 738 430 U1 zeigt eine Klemmverschraubung für Kabel mit einer auf einen Kabelstutzen schraubbaren Spannmutter (Druckschraube), wobei der Innenraum der Spannmutter eine Spannbüchse aufweist, die mit Kugeln gefüllt sein kann, die beim Verschrauben gegen den Kabelmantel gedrückt werden. Die Kugeln dienen lediglich zur Klemmung. Unterschiedlichen Kabeldurchmesser sind hier prinzipiell möglich, eine Dichtfunktion ist jedoch nicht gegeben. Als nachteilig werden der vergleichsweise große Raumbedarf, die schwierige Montage und natürlich auch die Verlierbarkeit der Kugeln bei der Montage angesehen. Eine zusätzliche Dichtung ist nicht angegeben.

Die DE 87 16 966 U1 zeigt eine Kabelverschraubung aus Kunststoff zur Abdichtung und Zugentlastung von Kabeln. Sie weist einen Schraubstutzen mit einem Dichtungskörper und eine Druckschraube auf, wobei am Schraubstutzen voneinander getrennte Zungen angeordnet sind, die beim Verschrauben der Druckschraube auf den Kabelmantel gedrückt werden. Als Nachteil werden der Herstellungs- und Montageaufwand angesehen. Bei der Verschraubung werden nur die Klemmwirkung und damit die Zugbelastbarkeit des Kabels erhöht. Diese Kabelverschraubung ist nur für einen definierten Kabeldurchmesser geeignet.

Die WO 02/067399 A1 beschreibt eine Kabelverschraubung mit einem Grundkörper und einer Druckschraube, wobei der Grundkörper ein zu einem Innengewinde der Druckschraube passendes Außengewinde und einen Innenraum zur Durchführung eines Kabels aufweist, wobei das Kabel durch einen elastischen Dichteinsatz und einen Klemmkäfig geführt wird, wobei die Innenkontur der Druckschraube beim Spannen gegen den elastischen Dichteinsatz und den Klemmkäfig gepresst wird, wobei der Klemmkäfig einstückig ausgebildet ist und entlang eines Kreisringes angeordnete abgerundete Druckelemente aufweist, die von der Druckschraube in Richtung des Kabels verschoben werden.
Nachteilig an dieser Anordnung ist, dass die Innenkontur der Druckschraube lediglich eine Verjüngung, und zwar am hinteren Ende aufweist, die unmittelbar auf den Klemmkäfig 72 und mittelbar auf den Dichteinsatz 71 gepresst wird, so dass der elastomere Dichteinsatz auch als Zugentlastung wirkt, und deshalb nicht mit einer zur effizienten Dichtung von Kabeln mit unterschiedlichen Durchmessern erforderlichen Nachgiebigkeit ausgeführt werden kann. Eine weitere Verjüngung zur Pressung eines Klemmkäfigs oder eines Dichteinsatzes weist die Innenkontur der in dieser Druckschrift gezeigten Druckschraube jedenfalls nicht auf.

Die US 2012/252259 A1 zeigt eine Kabelverschraubung mit einer Druckschraube und einem Klemmkäfig, dessen Zungen mit dem Ring auf dessen zur Druckschraube gewandten Seite verbunden sind, der beim Spannen der Druckschraube in radialer Richtung, auf das Abschirmgeflecht des Kabels gedrückt wird. Hinweise zur Zugentlastung oder Abdichtung der Kabelverschraubung sind dieser Druckschrift nicht entnehmbar.

Die US 6 350 955 B1 zeigt eine Kabelverschraubung mit einer Druckschraube und einem Klemmkäfig, dessen Zungen mit dem Ring ebenfalls auf der zur Druckschraube gewandten Seite verbunden sind. Beim Spannen der Druckschraube wird der Klemmkäfig in bekannter Weise in radialer Richtung auf den Kabelmantel gepresst. Hinweise zur Abdichtung können dieser Druckschrift nicht entnommen werden. Eine weitere Verjüngung zur Pressung eines Dichteinsatzes ist deshalb auch nicht nahegelegt.

Die DE 100 11 341 A1 zeigt eine elektrische Steckvorrichtung mit einer Kabelverschraubung, wobei die Klemmzungen eines Klemmkäfigs zunächst gegen eine elastomere Dichthülse und diese wiederum gegen den Kabelmantel gepresst wird.
Die freien Enden der Klemmzungen sind geriffelt oder mit Klauenzähnen versehen.
Der Klemmkorb dient ausschließlich zum Verpressen der Dichthülse und damit der Kabelabdichtung. Um eine gute Dichtwirkung zu erzielen, ist die Dichthülse aus einem relativ weichen Material gefertigt. Das weiche Material steht aber einer effektiven Zugentlastung entgegen. Insbesondere bei Temperaturschwankungen relaxiert das weiche Material und die schon geringe Zugentlastung nimmt weiter ab.

Die DE 297 01 321 U1 beschreibt eine (Kabel-) Verschraubung mit einem Grundkörper und einer Druckschraube, wobei der Grundkörper eine zu einem Innengewinde der Druckschraube passendes Außengewinde und einen Innenraum zur Durchführung eines Kabels aufweist, wobei das Kabel durch einen elastischen Dichteinsatz und einen Klemmkäfig geführt wird, wobei die Innenkontur der Druckschraube beim Spannen, (unmittelbar) gegen dem Klemmkäfig und damit (mittelbar) gegen den Dichteinsatz gepresst wird, wobei der Klemmkäfig einstückig ausgebildet ist und entlang eines Kreisrings liegende Klemmzungen aufweist, wodurch neben der Abdichtung des Kabels zugleich auch dessen Zugentlastung erreicht, was allerdings die zulässigen Toleranzen für den Kabelduchmesser merklich einschränkt.

Die DE 24 34 847 C3 beschreibt einen Schnappverschluss zur Befestigung von runden Datenträgermagazinen, insbesondere Magenbandspulen mittels deren Hohlnabe mit einem daran befestigten Teller oder Flansch. Die hier gezeigte Magazinhalterung weist eine Anzahl von flexiblen Einrastfingern mit kugeligen Endverdickungen auf, die in eine an den Enden von Blattfedern angeordneten ringförmigen Nut einzurasten und auszurasten vermögen. Es handelt sich um eine rein formschlüssige Schnappverbindung, wobei es weder um ein Kabel, noch um dessen Befestigung geht. Die kugeligen Endverdickungen drücken aufgrund ihrer Federkraft nach außen. Eine Druckschraube ist nicht genannt.

Die Aufgabe der Erfindung besteht darin, eine Kabelverschraubung anzugeben, welche die genannten Nachteile überwindet, die einfach und vor allem kostengünstig herstellbar ist, die eine gute Dichtwirkung, eine hohe Zugentlastung aufweist, die für unterschiedliche Kabeldurchmesser geeignet ist, die leicht und schnell zu montieren ist und möglichst wenige Einzelteile aufweist.

Diese Aufgabe wird mit den Kennzeichen des Patentanspruchs 1 gelöst. Die Unteransprüche betreffen die Ausgestaltung der Erfindung. Der nebengeordnete Anspruch 10 betrifft einen Steckverbinder (Kabelstecker oder Dose) mit der erfindungsgemäßen Kabelverschraubung.

Der wesentliche Erfindungsgedanke besteht darin, die Kabelzugentlastung und die Dichtfunktion räumlich zu trennen, und zur Zugentlastung einen als einstückiges Formteil ausgeführten Klemmkäfig zu verwenden, der als Weiterentwicklung der oben genannten Klemmzungen Filmscharniere aufweist, an deren Enden kugelförmige Druckelemente aus einem gegenüber dem Kabelmantel unnachgiebigem Material angeordnet sind, und den Kabeleintritt mit einem an sich bekannten zylindrischen Dichteinsatz zu realisieren, wobei beide mittels derselben Druckschraube auf zwei unterschiedliche Stellen des Kabelmantels gepresst werden.

Der Vorteil besteht darin, dass die Kabeldichtung sehr nachgiebig sein kann, was deren Anpassung an unterschiedliche Kabeldurchmesser ermöglicht, während die Kugelelemente eine vom Kabeldurchmesser nahezu unabhängige Klemmkraft erzeugen.
So ist die erfindungsgemäße Kabelverschraubung in überraschender Weise ohne Adaption für einen Klemmbereich von beispielsweise 3 bis 6 mm Kabeldurchmesser verwendbar.
Die Dichtung am Gewinde der Druckschraube erfolgt durch einen elastomeren Dichtungsring, der als standardisierter O-Ring oder auch als Formteil ausgeführt sein kann.

Ein weiterer Vorteil besteht darin, dass durch den Wegfall der Zugentlastungsfunktion für das Elastomer dieses nicht mehr nach Haftung bzw. Reibung gegenüber dem Kabel ausgewählt werden muss, was bisher die Optimierung einer Dichtung mit Zugentlastung fast unmöglich machte, sondern der Anwender die Werkstoffe nun freier wählen kann.

Vorteilhaft werden der Grundkörper und der Klemmkäfig bereits werksseitig vormontiert und dann miteinander verschweißt (vorzugsweise durch Ultraschall), so dass der Nutzer nur noch das Kabel in die mit den Dichtungen versehene Einheit einführen, an die Schraubklemmen anschließen und die Druckschraube spannen muss.
Der Außendurchmesser der Druckschraube wird so groß gewählt, dass auf Grund der Hebelwirkung eine werkzeuglose Montage möglich ist.

Weiterhin ist es vorteilhaft, die Druckschraube in der Nähe der Kabeleintrittsöffnung mit einem zweiten Innengewinde zu versehen. Dadurch wird das an der Kabeleintrittsöffnung ohnehin notwendige Dichteinsatz beim Spannen der Druckschraube in das zweite Gewinde hineingepresst, was eine Schraubensicherung im Sinne einer Kontermutter zur Folge hat. Dieses zweite Gewinde hat vorzugsweise dieselbe Steigung wie das Hauptgewinde, um die Entformung bei der Herstellung der Druckschraube als Spritzgussteil nicht zu erschweren, weil diese wegen des Hauptgewindes vorteilhaft drehend (ausspindelnd) erfolgen kann.

Schließlich können die Kugeln des kreisringförmigen Druckelements an der Oberfläche aufgeraut oder profiliert sein, um deren Haftung auf dem Kabelmantel zu verbessern.

Die Erfindung wird anhand der Zeichnung näher erläutert:
Fig. 1 zeigt ein Schnittbild der Kabelverschraubung mit einem großen Kabeldurchmesser,
Fig. 1a zeigt ein Schnittbild der Kabelverschraubung mit einem kleinen Kabeldurchmesser,
Fig. 2 zeigt eine Explosionsdarstellung der Kabelverschraubung im entspannten Zustand,
Fig. 3 zeigt eine isometrische Darstellung eines entspannten Klemmkäfigs,
Fig. 4 zeigt eine Isometrische Darstellung eines gespannten Klemmkäfigs,
Fig. 5 zeigt den Klemmkäfig 6 vergrößert in axialer Draufsicht im gespannten Zustand,
Fig. 5a zeigt den Klemmkäfig 6 vergrößert in axialer Draufsicht im entspannten Zustand,
Fig. 6 zeigt eine weitere Ausführung des erfindungsgemäßen Klemmkäfigs als Schnittbild,
Fig. 7 zeigt den Klemmkäfig aus Fig. 6 in isometrischer Darstellung.

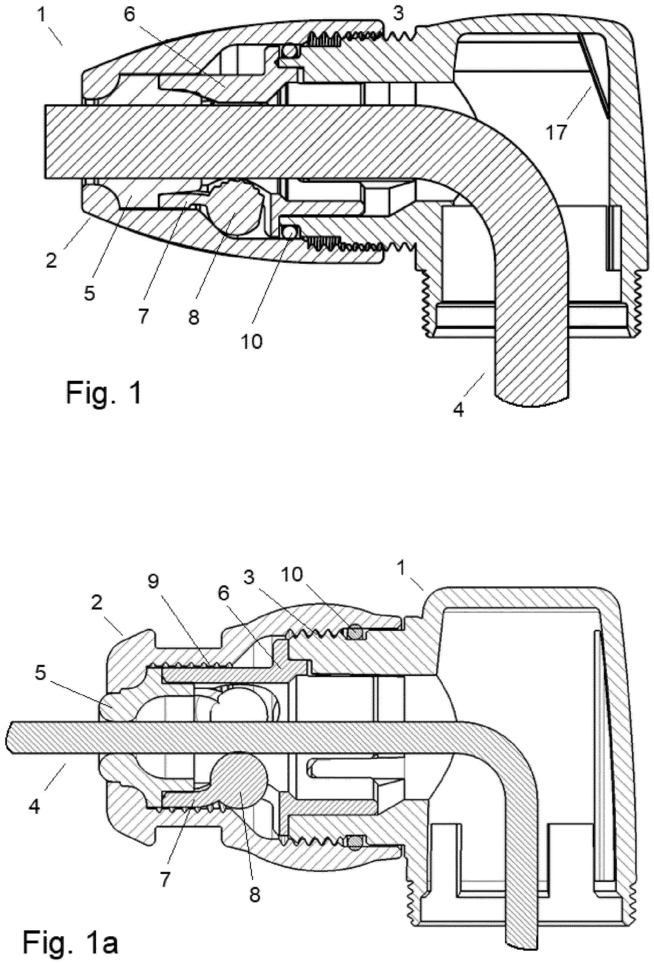

Figur 1 zeigt ein Schnittbild der erfindungsgemäßen Kabelverschraubung im entspannten Zustand mit einem Grundkörper 1 und einer Druckschraube 2, wobei der für die Erfindung unwesentliche auf die übliche Weise gestaltete Steckerteil des Grundkörpers 1 zur besseren Übersicht weggelassen wurde.
Der Grundkörper 1 weist ein zu einem Innengewinde der Druckschraube 2 passendes Außengewinde 3 und einen Innenraum zur Durchführung eines Kabels 4 auf, wobei das Kabel 4 durch einen elastischen Dichteinsatz 5 und einen Klemmkäfig 6 geführt wird.
Die Innenkontur der Druckschraube 2 verjüngt sich an zwei Stellen, die beim Spannen der Druckschraube 2 zum einen gegen den elastischen Dichteinsatz 5 und zum anderen gegen den Klemmkäfig 6 gepresst werden.
Der einstückig ausgebildete Klemmkäfig 6 besteht vorteilhaft aus einem zähelastischen Werkstoff, der biegeelastisch, aber nicht relaxierend ist (z.B. Ultramid). Er weist entlang eines Kreisringes angeordnete Filmscharniere 7 auf, an deren Enden kugelförmige, vorzugsweise profilierte Druckelemente 8 angeordnet sind, die beim Spannen der Druckschraube 2 von der sich an zwei Stellen verjüngenden Innenkontur der Druckschraube 2 auf das Kabel 4 gepresst werden.
Die Kabeleintrittsöffnung der Druckschraube 2 wird mit einem elastomeren Dichteinsatz 5 abgedichtet, durch den das Kabel 4 in den Klemmkäfig 6 geführt wird. Beim Spannen der Druckschraube 2 wird der Dichteinsatz 5 von der sich in Schraubrichtung verjüngenden Innenkontur in den Raum zwischen Kabelmantel und Druckschraube gepresst und dichtet diesen ab, ohne dabei eine nennenswerte Zugentlastung zu bewirken.
Der Klemmkäfig 6 ist in der Einschraubrichtung geöffnet, das heißt, die freien Enden der Filmscharniere weisen nach innen, was die Kabeleinführung über die Eintrittsöffnung in der Druckschraube 2 erleichtert. Das Material für den Klemmkäfig und für die kugelförmigen Druckelemente 8 ist so ausgewählt, dass sie beim Verschrauben den Kabelmantel deformieren ohne sich dabei selbst nennenswert zu verformen.
In einer vorteilhaften Ausgestaltung wird der Grundkörper 1 mit dem Klemmkäfig 6 vorzugsweise mit Ultraschall verschweißt, so dass der Nutzer bei der Endmontage nur noch wenige Komponenten mit dem Kabel 4 zu verbinden hat.

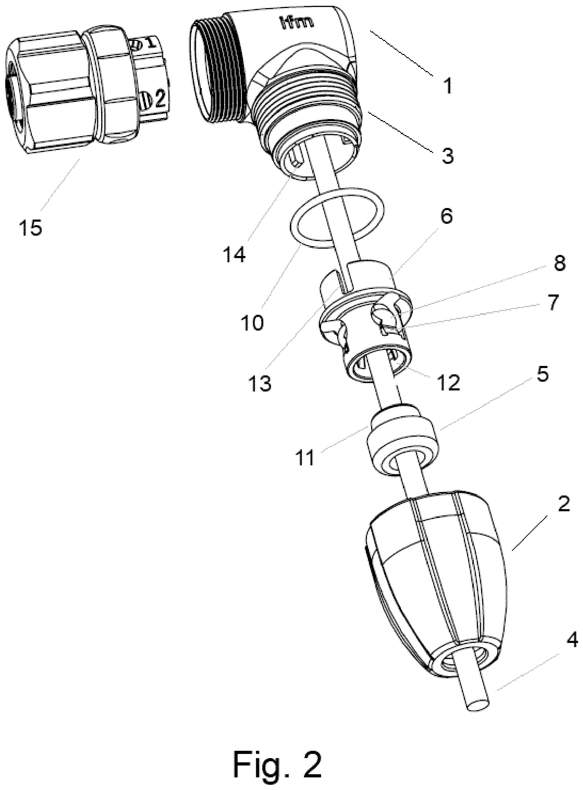

An der Innenwand des Grundkörpers 1 befindet sich einen ist eine Einführschräge 17, welche die Einführung des Kabels 4, insbesondere dessen problemlose 90°- Biegung zu dem in Figur 2 gezeigten Stecker 15 erleichtern soll.

Fig. 1a zeigt die Kabelverschraubung gemäß Fig. 1 mit einem kleineren Kabeldurchmesser. Der Dichteinsatz 5 wird dabei soweit zusammengepresst, dass kein Totraum an der Öffnung der Druckschraube entsteht.
Die Druckschraube 2 weist im Bereich ihrer Kabeleintrittsöffnung ein zweites Innengewinde 9 mit derselben Steigung wie das Hauptgewinde auf, in das der elastomere Dichteinsatz 5 beim Spannen der Druckschraube 2 gepresst wird, wobei er deren Gewindeform annimmt.

Figur 2 zeigt eine Explosionsdarstellung der Kabelverschraubung im entspannten Zustand. Bezüglich der Referenzen 1 bis 10 wird auf die obige Beschreibung zur Fig. 1 verwiesen. Das zweite Gewinde in 9 ist verdeckt.

Der Dichteinsatz 5 weist eine Verzahnung 11 auf, die bei der Montage in eine gegenüber liegende korrespondierende Verzahnung 12 des Klemmkäfigs eingreift und ein gegenseitiges Verdrehen dieser beiden Bauteile verhindert. Außerdem ist der Stecker 15 dargestellt. Die Nummerierung auf dem Isolationskörper betrifft die elektrische Anschlüsse.

Der Klemmkäfig 6 wird durch eine Führungsnut 13 und eine korrespondierende Codierung 14 im Grundkörper 1 verdrehsicher in einer vorgegebenen Position gehalten. So liegt das Kabel 4 bei einem Winkelstecker immer auf einem kugelförmigen Druckelement 8, was dessen Zentrierung beim Spannen der Druckschraube 2 sicherstellt.
Schließlich ist noch ein Schraubklemmanschluss 15 dargestellt, wobei die beiden sichtbaren Klemmschrauben normgerecht mit 2 und 3 gekennzeichnet sind.

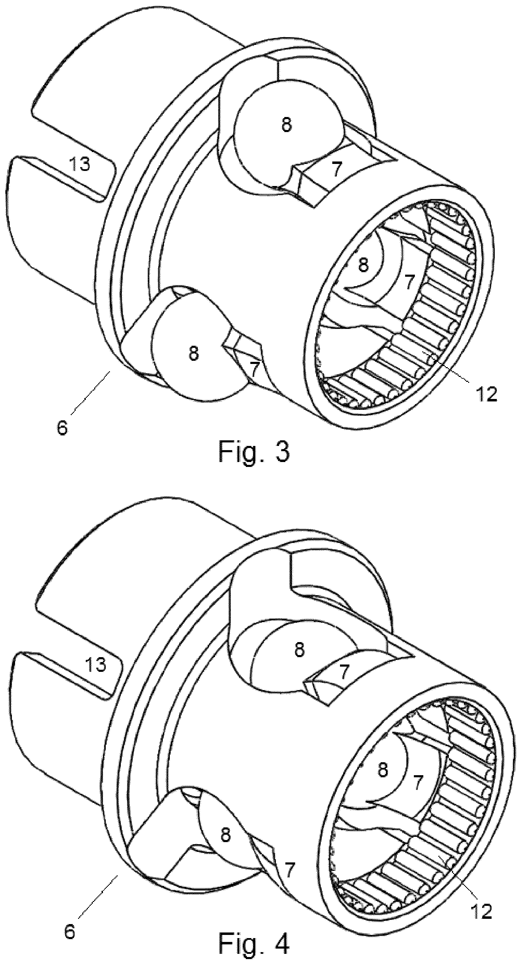

Die Fig. 3 zeigt eine isometrische Darstellung eines entspannten Klemmkäfigs 6. Die drei kugelförmigen Druckelemente 8 (Klemmkugeln) sind durch Filmscharniere 7 positioniert. Sie sind selbstzentrierend und können nicht axial verschoben werden. Auch bei einer größeren Anzahl von Druckelementen 8 soll eines immer unten, d. h. unter dem hier nicht dargestellten Kabel 4 liegen.
Die freien Enden der Filmscharniere 7 weisen nach innen, um die Kabeleinführung über die Eintrittsöffnung in der Druckschraube 2 zu erleichtern. Insbesondere sind sie so ausgeführt, dass der freie Durchmesser zwischen den Druckelementen 8 (Klemmkugeln) kleiner ist als der Kabeldurchmesser, so dass die dargestellte Position erst beim Einführen eines Kabels 4 erreicht wird.

Die Fig. 4 zeigt eine isometrische Darstellung eines gespannten Klemmkäfigs 6, wobei die Druckschraube 2 und das Kabel 4 auch hier nicht dargestellt sind.

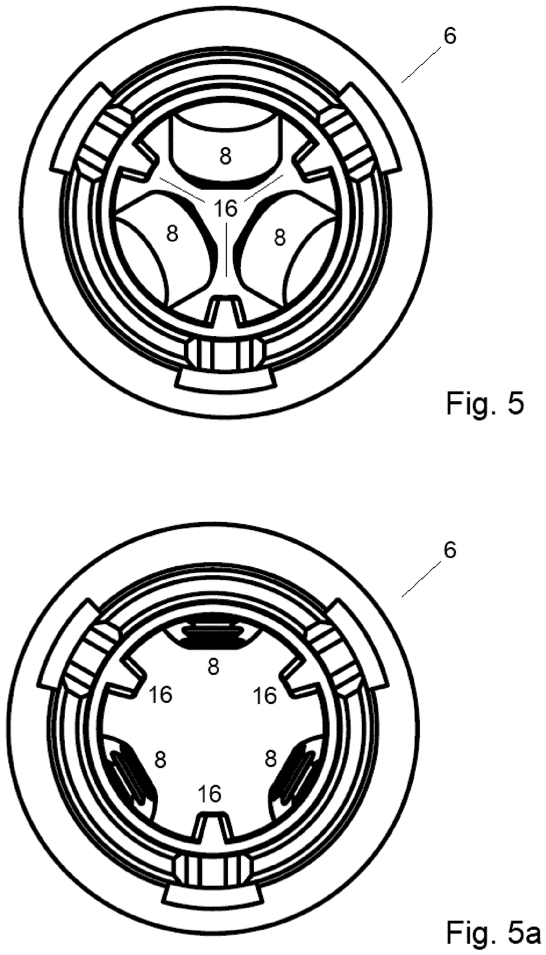

Die Figuren 5 und 5a zeigen den Klemmkäfig 6 in einer axialen Draufsicht im gespannten und im entspannten Zustand.
Zwischen den kugelförmigen Druckelementen 8 sind Zentriernasen 16 angeordnet. Sie dienen zur mittigen Positionierung des Kabels 4. So wird verhindert, dass sich Kabel 4 mit geringerem Durchmesser zwischen zwei kugelförmigen Druckelementen 8 verklemmen.

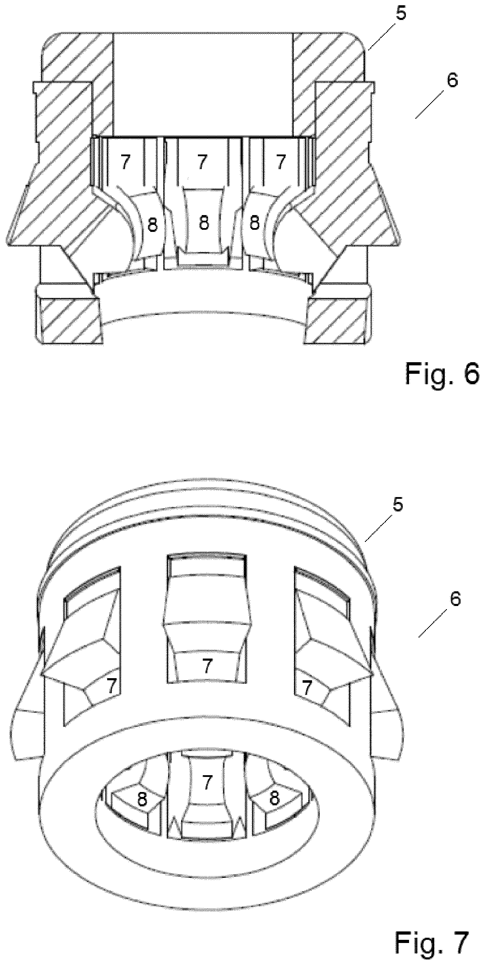

Fig. 6 zeigt eine weitere Ausführung des erfindungsgemäßen Klemmkäfigs 6 als Schnittbild. Da der im oberen Teil der Figur dargestellte Dichteinsatz 5 ausschließlich zur Abdichtung dient, und nicht zur Zugentlastung beitragen soll, kann er aus einem weichen Elastomer mit einer geringen Adhäsion zum Kabelmantel bestehen. Um die Montage zu erleichtern, kann sogar ein gut auf dem Kabelmantel gleitendes Material ausgewählt werden, denn wie eben ausgeführt, braucht der Dichteinsatz 5 keine Reibkräfte aufzunehmen.
Der Klemmkäfig 6 ist entspannt. Das Kabel 4 wurde zu besseren Übersicht weggelassen. Die Filmscharniere 7 und die Druckelemente 8 sind hier weiter in den Klemmkäfig 6 integriert. Die Druckelemente 8 sind lediglich an den mit dem Kabel 4 in Berührung kommenden Stellen kugelförmig ausgestaltet. Sie werden erfindungsgemäß durch die Filmscharniere 7 positioniert. Diese sind selbstzentrierend und können nicht in axialer Richtung verschoben werden.

Fig. 7 zeigt den Klemmkäfig aus der Figur 6 in einer isometrischen Darstellung.

Nachfolgend sollen die Montage der erfindungsgemäßen Kabelverschraubung und deren Funktionsweise in Bezugnahme auf Figur 2 näher erläutert werden:
Zuerst werden die Komponenten auf das Kabel 4 gesteckt. Dann werden die konfektionierten Leiter des Kabels 4 mit dem Schraubklemmenanschluss 15 verbunden, dessen Kontakte wie gezeigt, normgerecht nummeriert sind.
Anschließend wird der Schraubklemmenanschluss 15 mit dem Grundkörper 1 verschraubt. Ein Verdrillen des Kabels 4 wird auf die bekannte Weise durch Codierung im Grundkörper 1 und im Schraubklemmenanschluss 15 verhindert.
Nun wird der Klemmkäfig 6 auf den Grundkörper 1 gesteckt, wobei dessen Lage durch die Aussparungen 13 und die Codierungen 14 festgelegt ist.
Ein vormontierter Dichtungsring 10 dichtet die Schnittstelle zwischen dem Grundkörper 1 und der Druckschraube 2 ab.
Schließlich wird die gesamte Anordnung durch Spannen (Aufschrauben) der Druckschraube 2 verschraubt.

In einer vorteilhaften, insbesondere für gerade Steckverbinder geeigneten Ausgestaltung wird der Klemmkäfig 6 bereits werksseitig mit dem Grundkörper 1 verschweißt.

Der Dichteinsatz 5 weist vorteilhaft eine Verzahnung 11 auf, die mit einer gleichartigen Verzahnung 12 am Klemmkäfig 6 eine gegenseitige Verdrehung der Baugruppen verhindert.

Der Klemmkäfig 6 ist einstückig ausgebildet ist und weist in diesem Fall drei entlang eines Kreisringes angeordnete Filmscharniere 7 auf.
An den Enden der Filmscharniere 7 sind erfindungsgemäß kugelförmige Druckelemente 8 angeordnet, die beim Spannen der Druckschraube 2 von der sich hier verjüngenden Innenkontur (erste Druckstelle) in Richtung des Kabels 4 verschoben und so gegen das Kabel 4 gepresst werden.
Der elastische Dichteinsatz 5 wird ebenfalls von der sich gegenüber des Dichteinsatzes 5 verjüngenden Innenkontur der Druckschraube (zweite Druckstelle) auf das Kabel 4 gepresst, und dichtet es ab, wobei das weiche Material nicht nennenswert zur Zugentlastung beiträgt. Wie man sieht, ist der Klemmkäfig 6 mit den Filmscharniere 7 und den Druckelementen 8 als einstückiges Formteil ausgebildet.

Beim Aufschrauben der Druckschraube 2 werden sowohl der Klemmkäfig 6 als auch das Dichteinsatz 5 auf das Kabel 4 gedrückt, bzw. gepresst.

Aufgrund des weichen Materials des Dichteinsatzes 5, EPDM im Lebensmittelbereich und FKM (Viton) im Werkzeugbereich, können Kabel 4 mit unterschiedlichen Durchmessers eingesetzt werden, sofern sie durch den Klemmkäfig 6 passen.

Die Kugeln drücken punkförmig auf den Kabelmantel, ohne dabei selbst deformiert zu werden, wobei eine hohe und vor allem temperaturunabhängige Klemmwirkung entsteht.

Weil der Dichteinsatz 5 mechanisch kaum belastet wird, wird ist dessen temperatur- und altersbedingte Relaxation spürbar gemindert, und die Verschraubung bleibt lange dicht.

Der Klemmkäfig 6 besteht vorteilhaft aus PA66 Ultramid A3K, wodurch die Klemmwirkung auch bei Temperaturschwankungen zwischen -25° - 100° erhalten bleibt.

Die erfindungsgemäße Anordnung erlaubt eine leichte Montage, eine effektive Zugentlastung und eine hohe Dichtigkeit.

In einer weiteren Ausgestaltung weist die Druckschraube 2 im Bereich des Dichteinsatzes 5 (gegenüber) ein zweites Innengewinde 9 auf, das beim Spannen der Druckschraube 2 in das Dichteinsatz 5 eingeprägt wird, so dass im Zusammenwirken mit dem beiden Verzahnungen 11 und 12 eine Art von Schraubensicherung mit dem Klemmkäfig 6 entsteht.

Schließlich können die die kugelförmigen Druckelemente 8 an ihrer Oberfläche aufgeraut, wie in Figur 1 profiliert oder auch beschichtet sein, um deren Haftung auf dem Kabelmantel noch weiter zu verbessern.

Wie bereits ausgeführt, sind Zugentlastung und Kabeldichtung vorteilhafterweise getrennt.

Wegen der hohen Elastizität des Dichteinsatzes 5 kann der Kabeldurchmesser in einen vergleichsweise breiten Bereich von beispielsweise 3 bis 6 mm variieren, ohne das die Dichtigkeit davon beeinträchtigt wird.

Der Klemmkäfig 6 wirkt direkt und damit unabhängig von einem wie auch immer gestalteten Dichteinsatz 5 auf das Kabel 4, was für eine stabile und dauerhafte Zugentlastung sorgt. Die Dichtigkeit kann nicht durch Zugkräfte auf das Kabel 4 beeinträchtigt werden.

Die Filmscharniere 7 mit den Druckelementen 8 sind so ausgeformt, dass auf das Kabel 4 ausgeübte Zugkräfte die Klemmwirkung aufgrund einer Keilwirkung erhöhen.

### Bezugszeichenliste

- 1: Grundkörper
- 2: Druckschraube mit einem ersten Innengewinde
- 3: Außengewinde des Grundkörpers
- 4: Kabel
- 5: Dichteinsatz
- 6: Klemmkäfig aus einem zähelastischen Werkstoff (z. B. Ultramid A3K)
- 7: Filmscharniere
- 8: Kugelförmige Druckelemente
- 9: Zweites Innengewinde in der Druckschraube
- 10: Dichtungsring
- 11: Verzahnung am Dichteinsatz
- 12: Verzahnung am Klemmkäfig
- 13: Aussparung im Klemmkäfig
- 14: Codierung (14) im Innenraum des Grundkörpers
- 15: Schraubklemmanschluss
- 16: Zentriernasen zur mittigen Positionierung des Kabels 4
- 17: Einführhilfe für das Kabel 4 (Einführschräge)

## Patentansprüche

1. Kabelverschraubung mit einem Grundkörper (1) und einer Druckschraube (2), wobei der Grundkörper (1) ein zu einem Innengewinde der Druckschraube (2) passendes Außengewinde (3) und einen Innenraum zur Durchführung eines Kabels (4) aufweist, wobei das Kabel (4) durch einen elastischen Dichteinsatz (5) und einen Klemmkäfig (6) geführt wird, wobei die Innenkontur der Druckschraube (2) beim Spannen gegen den elastischen Dichteinsatz (5) und den Klemmkäfig (6) gepresst wird, wobei der Klemmkäfig (6) als einstückiges Formteil ausgebildet ist und entlang eines Kreisringes angeordnete Filmscharniere (7) aufweist, die von der Druckschraube (2) in Richtung des Kabels (4) verschoben werden, wobei an den Enden der Filmscharniere (7) Druckelemente (8) angeordnet sind, **dadurch gekennzeichnet, dass** die Druckelemente (8) an Stellen, die dazu vorgesehen sind, mit den Kabeln in Berührung gebracht zu werden, kugelförmig ausgestaltet sind und, dass die Druckschraube (2) eine sich an einer ersten und an einer zweiten Stelle verjüngende Innenkontur aufweist, die zwei getrennte Druckstellen bilden, wobei die erste Druckstelle der Druckschraube (2) dazu ausgebildet ist, die Druckelemente (8) zum Zweck der Zugentlastung gegen das Kabel (4) zu pressen und die zweite Druckstelle der Druckschraube dazu ausgebildet ist, den elastischen Dichteinsatz (5) zum Zweck der Abdichtung auf das Kabel (4) zu pressen.

2. Kabelverschraubung gemäß Anspruch 1, **dadurch gekennzeichnet, dass** der Klemmkäfig (6) mit dem Grundkörper (1) verschweißt ist.

3. Kabelverschraubung gemäß Anspruch 1 oder 2, **dadurch gekennzeichnet, dass** die Druckschraube (2) am Dichteinsatz (5) ein zweites Innengewinde (9) aufweist.

4. Kabelverschraubung gemäß einem der vorigen Ansprüche, **dadurch gekennzeichnet, dass** die kugelförmigen Druckelemente (8) an der Oberfläche aufgeraut oder profiliert sind.

5. Kabelverschraubung gemäß einem der vorigen Ansprüche, **dadurch gekennzeichnet, dass** die Filmscharniere (7) auf der zur Druckschraube (2) gewandten Seite mit dem Klemmkäfig (6) verbunden sind.

6. Kabelverschraubung gemäß einem der vorigen Ansprüche, **dadurch gekennzeichnet, dass** das Dichteinsatz (5) und der Klemmkäfig (6) korrespondierende Verzahnungen (11), (12) aufweisen, über die sie verdrehsicher miteinander verbunden sind.

7. Kabelverschraubung gemäß einem der vorigen Ansprüche, **dadurch gekennzeichnet, dass** der Klemmkäfig (6) durch eine Führungsnut (13) und eine Codierung (14) im Innenraum des Grundkörpers (1) verdrehsicher in einer vorgegebenen Position im Grundkörper (1) gehalten wird.

8. Kabelverschraubung gemäß einem der vorigen Ansprüche, **dadurch gekennzeichnet, dass** die Innenwand des Grundkörpers (1) eine Einführschräge (17) zur besseren Kabelführung aufweist.

9. Kabelverschraubung gemäß einem der vorigen Ansprüche, **dadurch gekennzeichnet, dass** zwischen den kugelförmigen Druckelementen (8) im Klemmkäfig (6) zur mittigen Positionierung des Kabels (4) geeignete Zentriernasen (16) angeordnet sind.

10. Steckverbinder mit einer Kabelverschraubung gemäß einem der Ansprüche 1 bis 9.

## Claims

1. Cable gland comprising a main body (1) and a compression screw (2), wherein the main body (1) has an external thread (3), which matches an internal thread of the compression screw (2), and an interior space for guiding a cable (4) through, wherein the cable (4) is guided through an elastic sealing insert (5) and a clamping cage (6), wherein the inner contour of the compression screw (2), upon tightening, is pressed against the elastic sealing insert (5) and the clamping cage (6), wherein the clamping cage (6) is integrally formed as a shaped part and has rounded pressure elements (8) which are arranged along a circular ring and are displaced in the direction of the cable (4) by the compression screw (2), **characterized in that** the compression screw (2) has an inner contour which tapers at a first point and at a second point, which first point and second point form two separate pressure points, wherein the first pressure point of the compression screw (2) is designed to press the pressure elements (8) against the cable (4) for the purpose of strain relief, and the second pressure point of the compression screw is designed to press the elastic sealing insert (5) onto the cable (4) for the purpose of sealing off.

2. Cable gland according to Claim 1, **characterized in that** the clamping cage (6) is welded to the main body (1) .

3. Cable gland according to Claim 1 or 2, **characterized in that** the compression screw (2) has a second internal thread (9) on the sealing insert (5).

4. Cable gland according to one of the preceding claims, **characterized in that** the spherical pressure elements (8) are roughened or profiled at the surface.

5. Cable gland according to one of the preceding claims, **characterized in that** the film hinges (7) are connected to the clamping cage (6) on that side which faces the compression screw (2).

6. Cable gland according to one of the preceding claims, **characterized in that** the sealing insert (5) and the clamping cage (6) have corresponding tooth systems (11), (12) by means of which they are connected to one another in a rotationally fixed manner.

7. Cable gland according to one of the preceding claims, **characterized in that** the clamping cage (6) is held in a prespecified position in the main body (1) in a rotationally fixed manner by a guide groove (13) and a coding (14) in the interior space of the main body (1).

8. Cable gland according to one of the preceding claims, **characterized in that** the inner wall of the main body (1) has an insertion bevel (17) for improved cable guidance.

9. Cable gland according to one of the preceding claims, **characterized in that** suitable centring lugs (16) are arranged between the spherical pressure elements (8) in the clamping cage (6) for centrally positioning the cable (4).

10. Plug-in connector comprising a cable gland according to one of Claims 1 to 9.

## Revendications

1. Passe-câble à visser comprenant un corps de base (1) et une vis de pressage (2), le corps de base (1) possédant un filetage mâle (3) adapté à un filetage femelle de la vis de pressage (2) et un espace intérieur servant au passage d'un câble (4), le câble (4) étant guidé à travers un insert d'étanchéité élastique (5) et une cage de serrage (6), le contour intérieur de la vis de pressage (2) étant poussé contre l'insert d'étanchéité élastique (5) et la cage de serrage (6) lors du serrage, la cage de serrage (6) étant réalisée d'un seul tenant sous la forme d'une pièce moulée et possédant des éléments de pressage (8) arrondis disposés le long d'un anneau circulaire, lesquels sont déplacés par la vis de pressage (2) en direction du câble (4), **caractérisé en ce que** la vis de pressage (2) possède un contour intérieur qui se rétrécit au niveau d'un premier et au niveau d'un deuxième côté, lesquels forment deux points de pressage séparés, le premier point de pressage de la vis de pressage (2) étant configuré pour presser les éléments de pressage (8) contre le câble (4) à des fins d'antitraction et le deuxième point de pressage de la vis de pressage étant configuré pour presser l'insert d'étanchéité élastique (5) sur le câble (4) à des fins d'étanchéité.

2. Passe-câble à visser selon la revendication 1, **caractérisé en ce que** la cage de serrage (6) est soudée avec le corps de base (1).

3. Passe-câble à visser selon la revendication 1 ou 2, **caractérisé en ce que** la vis de pressage (2) possède un deuxième filetage femelle (9) au niveau de l'insert d'étanchéité (5).

4. Passe-câble à visser selon l'une des revendications précédentes, **caractérisé en ce que** les éléments de pressage (8) en forme de billes sont rendus rugueux ou profilés au niveau de la surface.

5. Passe-câble à visser selon l'une des revendications précédentes, **caractérisé en ce que** les charnières à film (7) sont reliées à la cage de serrage (6) sur le côté qui fait face à la vis de pressage (2).

6. Passe-câble à visser selon l'une des revendications précédentes, **caractérisé en ce que** l'insert d'étanchéité (5) et la cage de serrage (6) possèdent des dentures (11), (12) correspondantes par le biais desquelles ils sont reliés l'un à l'autre en rotation solidaire.

7. Passe-câble à visser selon l'une des revendications précédentes, **caractérisé en ce que** la cage de serrage (6) est maintenue en rotation solidaire dans une position prédéfinie dans le corps de base (1) par une rainure de guidage (13) et un codage (14) dans l'espace intérieur du corps de base (1).

8. Passe-câble à visser selon l'une des revendications précédentes, **caractérisé en ce que** la paroi intérieure du corps de base (1) possède un biseau d'introduction (17) destiné à un meilleur guidage du câble.

9. Passe-câble à visser selon l'une des revendications précédentes, **caractérisé en ce que** des tenons de centrage (16) adaptés au positionnement centré du câble (4) sont disposés entre les éléments de pressage (8) en forme de billes dans la cage de serrage (6).

10. Connecteur à enfichage comprenant un passe-câble à visser selon l'une des revendications 1 à 9.
